Europäisches Patentamt

European Patent Office

Office européen des brevets

(19)

(11) **EP 0 853 395 B1**

(12) **FASCICULE DE BREVET EUROPEEN**

(45) Date de publication et mention
de la délivrance du brevet:
**07.02.2001 Bulletin 2001/06**

(51) Int Cl.7: **H04B 10/135**, H04B 10/148

(21) Numéro de dépôt: **97403178.3**

(22) Date de dépôt: **30.12.1997**

(54) **Dispositif de compensation de la dispersion de polarisation dans un système de transmission optique**

Vorrichtung zur Polarisationsdispersionskompensation in einem optischen Übertragungssystem

Polarisation dispersion compensation device in an optical transmission system

(84) Etats contractants désignés:
**DE FR GB IT SE**

(30) Priorité: **30.12.1996 FR 9616194**

(43) Date de publication de la demande:
**15.07.1998 Bulletin 1998/29**

(73) Titulaire: **ALCATEL**
**75008 Paris (FR)**

(72) Inventeurs:
 • **Bruyere, Frank**
 **75014 Paris (FR)**
 • **Francia, Christian**
 **42100 Reggio Emilia (IT)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(56) Documents cités:
 **EP-A- 0 716 516        WO-A-95/34141**
 **US-A- 5 473 457**

 • **PATENT ABSTRACTS OF JAPAN vol. 095, no. 011, 26 décembre 1995 & JP 07 231297 A (TOSHIBA CORP), 29 août 1995,**

## Description

L'invention concerne un dispositif pour compenser, au moins partiellement, et dynamiquement, la dispersion de polarisation dans un système de transmission à fibre optique. Un système de transmission à fibre optique, sur une longue distance, comporte :

- un terminal émetteur constitué essentiellement d'une diode laser émettant un signal optique totalement polarisé,
- une fibre optique monomode acheminant le signal émis par le terminal émetteur,
- et un terminal récepteur recevant le signal optique transmis par la fibre.

Tous les types de fibre présentent un phénomène de dispersion de polarisation : une impulsion émise par le terminal émetteur est reçue déformée. Elle présente une durée supérieure à sa durée originale. Cette déformation est due au fait que le signal optique se dépolarise pendant la transmission : Le signal reçu à l'extrémité de la fibre de liaison peut être considéré comme constitué de deux composantes orthogonales, l'une correspondant à un état de polarisation pour lequel la vitesse de propagation est maximale (état principal de polarisation le plus rapide) et l'autre correspondant à un état de polarisation pour lequel la vitesse de propagation est minimale (état principal de polarisation le plus lent). Autrement dit, un signal impulsionnel reçu à l'extrémité de la fibre de liaison peut être considéré comme étant composé d'un premier signal impulsionnel, polarisé suivant un état de polarisation privilégié, et arrivant en premier ; et d'un second signal impulsionnel se propageant suivant un état de propagation retardé, et arrivant avec un retard appelé retard différentiel instantané qui dépend notamment de la longueur de la fibre de liaison.

Si le terminal émetteur émet un signal optique constitué d'une impulsion très brève, le signal optique reçu par le terminal récepteur est constitué de deux impulsions successives polarisées orthogonalement et ayant un décalage temporel égal au retard différentiel instantanée. Ce retard peut être de l'ordre de 20 picosecondes pour une liaison de 100 kilomètres de longueur, comportant une fibre monomode telle qu'on en fabriquait il y a quelques années. La déformation des impulsions reçues par le terminal récepteur peut causer des erreurs de décodage des données transmises, par conséquent la dispersion de polarisation constitue un facteur limitant les performances des liaisons optiques, aussi bien analogiques que numériques.

Actuellement, on sait fabriquer des fibres monomodes à faible dispersion de polarisation (environ 0,05 pico-seconde/√km). Cependant, une proportion importante des fibres monomodes installées au cours des dix dernières années présente des dispersions de polarisation très élevées qui constituent un obstacle technique majeur pour l'augmentation des débits transmis. D'autre part, il n'est pas exclu de voir ce problème réapparaître pour les fibres à faible dispersion de polarisation que l'on sait produire aujourd'hui, si la course aux hauts débits se poursuit.

On sait réaliser des fibres à forte dispersion de polarisation, appelées aussi fibres à maintien de polarisation, qui permettent, en utilisant des tronçons de faible longueur, de procurer un retard différentiel fixe. En disposant judicieusement un tel composant (ou tout dispositif générateur de retard différentiel entre deux modes de polarisation orthogonaux) en série avec une liaison de transmission à forte dispersion de polarisation, on peut réaliser une compensation optique de la dispersion de polarisation. Ceci peut être réalisé soit en utilisant une fibre à maintien de polarisation de même retard différentiel que la liaison, mais en échangeant les états principaux de polarisation lent et rapide, soit en faisant coïncider un état principal de polarisation de l'ensemble constitué par la liaison et la fibre à maintien de polarisation avec l'état de polarisation de la source à l'émission. Pour ce faire, on utilise un contrôleur de polarisation que l'on place entre la liaison et la fibre à maintien de polarisation.

La valeur du retard différentiel et les états principaux de polarisation d'une liaison varient dans le temps en fonction de nombreux facteurs, tels que les vibrations et la température. Un dispositif de compensation doit donc nécessairement être adaptatif et le retard différentiel de la fibre à maintien de polarisation choisi de façon à être au moins égal à toutes les valeurs de retard différentiel que l'on veut compenser.

Le brevet US n° 5 473 457 décrit un procédé et un dispositif de compensation de la dispersion de polarisation dans un système de transmission optique. Le dispositif comporte :

- un contrôleur de polarisation et un tronçon de fibre à maintien de polarisation, intercalés entre la fibre de liaison et le terminal récepteur, dans cet ordre ;
- un dispositif d'asservissement commandant le contrôleur de polarisation en fonction d'un signal d'erreur ;
- des moyens pour moduler en fréquence le laser constituant la source du terminal émetteur ;
- et un dispositif de mesure de la modulation d'intensité du signal reçu, ce dispositif comportant un polariseur séparant le signal fourni par la fibre à maintien de polarisation, en deux signaux polarisés orthogonalement, l'axe de ce polariseur étant disposé avec un angle de 45° par rapport aux axes intrinsèques de la fibre à maintien de polarisation.

Le contrôleur de polarisation permet d'orienter, en la faisant tourner d'un angle donné, la polarisation de toutes les composantes du signal optique restitué par la fibre de liaison, cet angle étant défini par la valeur d'un signal de commande appliqué par le dispositif d'asservissement. Les moyens d'asservissement mis en oeuvre pour compenser la dispersion de polarisation servent à aligner l'état principal le plus lent (resp. le plus rapide) de la liaison à compenser avec l'état principal le plus rapide (resp. le plus lent) d'une fibre à maintien de polarisation sélectionnée de façon que son retard différentiel coïncide avec la dispersion de polarisation moyenne de la liaison à compenser. La modulation de la fréquence du signal optique est convertie en une modulation de polarisation par la dispersion de polarisation de l'ensemble constitué par la fibre de liaison et de la fibre à maintien de polarisation, puis en modulation d'intensité par le polariseur situé dans le dispositif de mesure de la modulation d'intensité du signal reçu. La profondeur de la modulation d'intensité est directement proportionnelle au retard différentiel instantané produit par la dispersion de polarisation, pondéré par l'impact de la polarisation de la source à l'émission (retard différentiel effectif). Le signal de modulation d'intensité est utilisé comme signal d'erreur pour commander le contrôleur de polarisation, qui est inséré entre la fibre de liaison et la fibre à maintien de polarisation, de façon à minimiser ce signal de modulation d'intensité, et donc minimiser le retard différentiel effectif produit par l'ensemble de la liaison et de la fibre à maintien de polarisation. Dans le cas idéal, la dispersion de polarisation de la fibre de liaison est exactement compensée par la dispersion de polarisation, de signe opposé, créée par la fibre à maintien de polarisation.

Ce dispositif connu a pour inconvénient :

- de nécessiter une modification à la fois du terminal émetteur afin de moduler la fréquence du signal optique et du terminal récepteur afin de compenser la dispersion de polarisation.

- et de nécessiter une optimisation spécifique pour chaque liaison à compenser présentant pas une dispersion de polarisation différente.

Le but de l'invention est de proposer un dispositif optique situé entièrement du côté du terminal récepteur, pour ne pas nécessiter de modification du terminal émetteur ; et qui ne nécessite pas une optimisation spécifique pour chaque liaison.

L' objet de l'invention est un dispositif de compensation de la dispersion de polarisation dans un système de transmission optique comportant : un terminal émetteur émettant un signal optique polarisé, une fibre optique de liaison, éventuellement des amplificateurs optiques, et un terminal récepteur ; ce dispositif comportant :

- un premier contrôleur de polarisation ;
- des moyens pour engendrer un retard différentiel entre deux modes de polarisation orthogonaux, ce contrôleur et ces moyens étant intercalés entre la fibre de liaison et le terminal récepteur dans cet ordre ;

- et des moyens d'asservissement du premier contrôleur de polarisation ;

**caractérisé** en ce que les moyens d'asservissement comportent des moyens pour orienter le vecteur de l'état principal de polarisation de l'ensemble constitué par la fibre, le premier contrôleur de polarisation et les moyens pour engendrer un retard différentiel, de façon à le faire coïncider avec le vecteur de l'état de polarisation du signal à la sortie du terminal émetteur.

Le dispositif ainsi caractérisé ne nécessite pas de modification du côté émetteur, et il permet une compensation totale de la dispersion de polarisation du moment que le retard différentiel produit par le compensateur est supérieur ou égal au retard différentiel existant dans la liaison que l'on veut compenser. Ce dispositif présente donc l'avantage de ne pas nécessiter d'optimisation spécifique pour chaque liaison à compenser présentant pas une dispersion de polarisation différente.

Selon un mode de réalisation particulier, les moyens d'asservissement comportent des moyens pour mesurer le degré de polarisation du signal optique restitué par les moyens pour engendrer un retard différentiel, et pour commander le premier contrôleur de polarisation de façon à maximiser le degré de polarisation mesuré.

Le dispositif ainsi caractérisé permet de faire fonctionner l'asservissement du premier contrôleur de polarisation selon deux points de fonctionnement. En particulier, les moyens d'asservissement ainsi caractérisés constituent des moyens permettant , dans l'un de ces deux points de fonctionnement, d'orienter le vecteur de l'état principal de polarisation de l'ensemble (constitué par la fibre, le premier contrôleur de polarisation et les moyens pour engendrer un retard différentiel), pour le faire coïncider avec le vecteur de l'état de polarisation du signal à la sortie du terminal émetteur.

Dans les deux points de fonctionnement, le fonctionnement repose sur la corrélation existante entre la dispersion de polarisation subie par un signal au cours de sa transmission, et la dépolarisation de ce signal. Cette dépolarisation est mesurée en déterminant le degré de dépolarisation du signal reçu, c'est à dire le rapport de la puissance de la composante dans la direction principale de polarisation de ce signal, sur la puissance totale de ce signal.

Quelque soit le point de fonctionnement choisi, la mesure du degré de polarisation du signal reçu ne nécessite aucune modification du signal optique émis par le terminal émetteur, ni aucun moyen particulier du côté du terminal émetteur, par conséquent l'ensemble du dispositif de compensation de la dispersion de la polarisation peut être situé du côté du terminal récepteur ou, pour des optimisations particulières, à n'importe quel endroit dans la liaison, indépendamment du terminal émetteur. De plus, il est possible de disposer plusieurs dispositifs de compensation le long de la ligne de transmission.

L'invention sera mieux comprise et d'autres caractéristiques apparaîtront à l'aide de la description d'exemples de réalisation :

- la figure 1 représente le schéma synoptique d'un système de transmission optique comprenant un premier exemple de réalisation du dispositif selon l'invention ;
- la figure 2 représente le schéma synoptique d'un système de transmission optique comportant un deuxième exemple de réalisation du dispositif selon l'invention ;
- la figure 3 représente le schéma synoptique plus détaillé des moyens utilisés dans ce deuxième exemple de réalisation, pour engendrer un retard différentiel entre deux modes de polarisation orthogonaux.

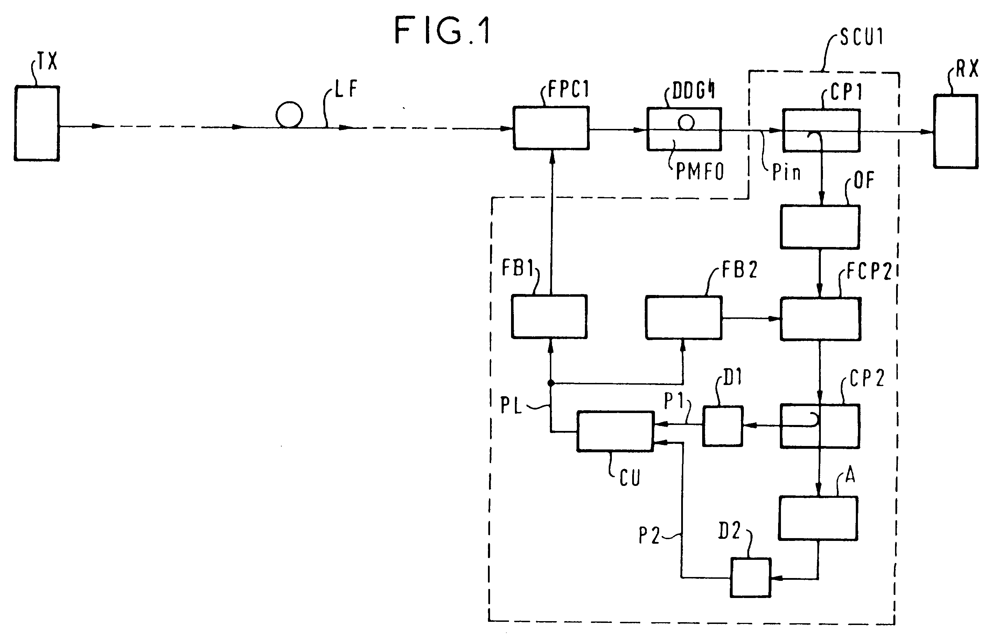

Le système de transmission optique qui est représenté sur la **figure 1** comporte :

- un terminal émetteur TX classique, transmettant des données, par exemple en modulant de manière binaire l'intensité d'une ou plusieurs porteuses optiques, chaque porteuse étant une onde entièrement polarisée fournie par un laser ;
- une fibre LF, dite de liaison, de type monomode ; une première extrémité de cette fibre étant reliée une sortie du terminal émetteur TX ; des amplificateurs optiques étant éventuellement intercalés le long de cette fibre pour compenser les pertes optiques ;
- un contrôleur de polarisation FPC1, ayant : une entrée reliée à la seconde extrémité de la fibre LF, une entrée de commande électrique permettant de faire tourner d'un angle donné la polarisation de toutes les composantes du signal optique reçu par ce contrôleur de polarisation, et une sortie ;
- un dispositif DDG1 générateur de retard différentiel, ce retard ayant une valeur constante dans ce premier exemple de réalisation ;
- un dispositif d'asservissement SCU1 ayant : une entrée reliée à la sortie du générateur de retard différentiel DDG1, une première sortie qui restitue un signal optique, et une seconde sortie fournissant un signal électrique de commande à l'entrée de commande du contrôleur de polarisation FPC1 ;
- et un terminal récepteur classique RX, permettant la restitution des données transmises par le signal optique qu'il reçoit, ce terminal ayant une entrée reliée à la première sortie du dispositif d'asservissement SCU1.

Le dispositif DDG1 générateur de retard différentiel est constitué, dans cet exemple de réalisation, par un tronçon PMF0 de fibre à maintien de polarisation, ayant une longueur fixée de façon à procurer un retard différentiel, entre l'état de polarisation pour lequel la vitesse de propagation est maximale et l'état de polarisation pour lequel la vitesse de propagation est minimale, supérieur ou égal au retard différentiel maximal constaté lors de la transmission d'un signal par la fibre de liaison LF et le contrôleur de polarisation FPC1.

Le but de l'asservissement du contrôleur de polarisation FPC1 est de maximiser le degré de polarisation en sortie du dispositif compensateur de dispersion de polarisation, ce qui minimise la dégradation subie par le signal liée à la dispersion de polarisation. L'asservissement peut se faire sur deux points de fonctionnement :

1)- Lorsque le retard différentiel du générateur de retard différentiel DGD1 est effectivement égal au retard différentiel de la fibre LF, et si le contrôleur de polarisation FPC1 est commandé de façon à orienter les états principaux de la fibre de liaison de sorte que l'état principal le plus lent (resp. le plus rapide) coïncide avec l'axe neutre le plus rapide (resp. le plus lent) de la fibre à maintien de polarisation par le dispositif DDG1, alors il y a compensation exacte du retard différentiel créé par l'ensemble de la fibre LF et du contrôleur FPC1, par le retard différentiel créé par le générateur DDG1. Dans la réalité, le retard différentiel créé par la fibre LF et le contrôleur de polarisation FPC1 a une valeur instantanée qui s'écarte plus ou moins de la valeur moyenne, par conséquent la compensation n'est pas totale en général.

2)- Un autre point de fonctionnement du dispositif, assurant un degré de polarisation maximum et une compensation de la dispersion de polarisation, correspond au cas où le contrôleur de polarisation FPC1 oriente le vecteur de l'état principal de polarisation de l'ensemble de la liaison, de façon à le faire coïncider avec le vecteur de l'état de polarisation du signal à la sortie de l'émetteur TX, à condition que le générateur de retard différentiel, par exemple le tronçon de fibre à maintien de polarisation PMF0, procure un retard différentiel supérieur ou égal au retard différentiel constaté lors de la transmission d'un signal par la fibre de liaison LF et le contrôleur de polarisation FPC1. En effet, lorsque cette dernière condition est satisfaite, le vecteur de l'état principal de polarisation de l'ensemble de la liaison peut être orienté à volonté dans n'importe quelle direction au moyen d'un contrôleur de polarisation, notamment il peut être orienté dans la même direction que celle du vecteur de l'état de polarisation du signal à la sortie de l'émetteur TX. Dans le cas où le retard différentiel de la fibre à maintien de polarisation PMF0 ne serait pas suffisant, la compensation de la dispersion de polarisation serait seulement partielle.

Le dispositif d'asservissement SCU1 comporte :

- un coupleur optique CP1 à trois accès, un premier accès constituant l'entrée du dispositif d'asservissement SCU1, un deuxième accès constituant la première sortie de ce dispositif SCU1, et un troisième accès fournissant une fraction du signal optique restitué par le dispositif DDG1 générateur de retard différentiel ;
- un filtre optique OF, intercalé sur le troisième accès du coupleur CP1, pour éliminer le bruit hors de la bande du signal utile, afin de ne pas fausser la mesure du degré de polarisation (ce filtre peut aussi être placé sur la fibre de liaison LF dans le cas d'une transmission monocanal) ;
- un contrôleur de polarisation FCP2 ayant : une entrée optique placée à la sortie du filtre OF, une sortie optique, et une entrée de commande électrique ;
- un coupleur CP2 à trois accès : un premier accès relié à la sortie optique du contrôleur de polarisation FCP2, un deuxième accès et un troisième accès fournissant respectivement deux fractions du signal optique restitué par le contrôleur de polarisation FCP2 ;
- un polariseur A placé sur le deuxième accès du coupleur CP2 ;
- un premier détecteur photoélectrique D1 placé sur le troisième accès du coupleur CP2 et ayant une sortie fournissant un signal électrique représentatif de l'intensité du signal optique fourni par ce troisième accès ;
- un second détecteur photoélectrique D2 placé en sortie du polariseur A, et ayant une sortie fournissant un signal électrique représentatif de l'intensité du signal optique reçu par ce détecteur ;
- une unité de calcul CU ayant deux entrées reliées respectivement aux sorties des détecteurs D1 et D2, et ayant une sortie fournissant un signal PL représentatif du degré de polarisation du signal optique à la sortie du dispositif DDG1 générateur de retard différentiel ;
- un dispositif de contre-réaction FB1 ayant une entrée reliée à la sortie de l'unité de calcul CU, et une sortie reliée à l'entrée de commande électrique du contrôleur de polarisation FPC1 ;
- et un dispositif de contre-réaction FB2 ayant une entrée reliée à la sortie de l'unité de calcul CU, et une sortie reliée à l'entrée de commande électrique du contrôleur de polarisation FCP2.

Le coupleur CP1 fournit sur son troisième accès une fraction constante du signal optique appliqué à l'entrée du dispositif d'asservissement SCU1. Cette fraction est filtrée par le filtre OF pour éliminer le bruit hors de la bande du signal utile, puis est fournie au contrôleur de polarisation FCP2 pour adapter la polarisation de cette fraction. Le signal restitué par le contrôleur FCP2 est ensuite divisé en deux fractions par le coupleur CP2, une fraction étant appliquée au polariseur A, et l'autre fraction étant appliquée au détecteur photoélectrique D1.

Les détecteurs photoélectriques D1 et D2 permettent de mesurer respectivement la puissance Pin du signal total, à un facteur d'atténuation K1 près, et la puissance Pp du signal polarisé suivant la polarisation du polariseur A, à un facteur d'atténuation K2 prés. Les détecteurs D1 et D2 fournissent respectivement des signaux de valeur :

$$P1 = K1. \; Pin$$

$$P2 = K2. \; Pp$$

Les facteurs d'atténuation K1 et K2 sont constants et sont connus. L'unité de calcul CU calcule le rapport Pp/Pin et active alternativement les dispositifs de contre-réaction FPC1 et FPC2. Le dispositif de contre-réaction FB2 modifie le signal électrique de commande du contrôleur de polarisation FPC2 de façon à orienter la direction de polarisation privilégiée du signal suivant la polarisation du polariseur A. Dans ce cas, la valeur du rapport Pp/Pin est maximisée et correspond au degré de polarisation du signal, qui est une grandeur comprise entre 0 et 1.

Le dispositif de contre-réaction FB1 modifie le signal électrique de commande du contrôleur de polarisation FPC1 dans un sens tel que la valeur PL du degré de polarisation mesuré est maximisée. La dispersion de polarisation est alors minimale.

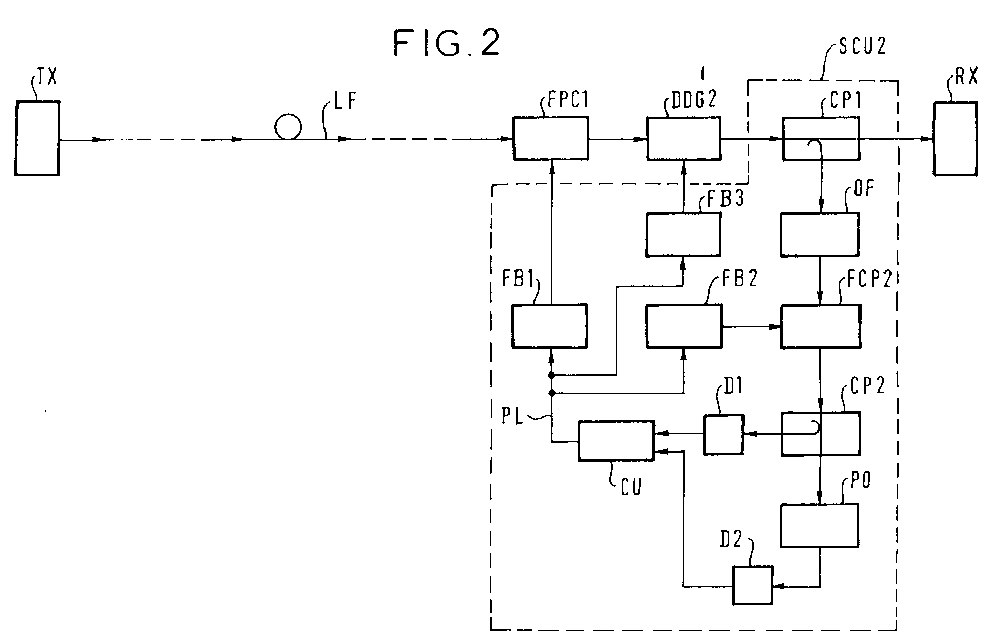

Le choix du point de fonctionnement 2 peut être réalisé à l'initialisation du dispositif, en assurant que l'asservissement du FPC1 s'opère de façon à obtenir l'extremum extremorum du degré de polarisation en sortie de l'ensemble constitué par la liaison, le FPC1 et le compensateur. La **figure 2** représente le schéma synoptique d'un système de transmission comportant un second exemple de réalisation du dispositif selon l'invention. Dans ce second exemple de réalisation, le dispositif générateur de retard différentiel DDG1 à retard différentiel fixé est remplacé par un dispositif DDG2 à retard différentiel réglable, et le dispositif d'asservissement SCU1 est remplacé par un dispositif d'asservissement SCU2 qui comporte les mêmes moyens que le dispositif SCU1, plus des moyens supplémentaires. Les moyens qui sont analogues à ceux décrits précédemment portent les mêmes références et ne seront pas redécrits.

Les moyens supplémentaires du dispositif SCU2 sont constitués d'un dispositif de contre-réaction FB3 ayant une sortie reliée à une entrée de commande électrique du générateur DDG2 de retard différentiel. Le dispositif FB3 a, d'autre part, une entrée reliée à la sortie de l'unité de calcul CU pour recevoir la valeur du degré de polarisation PL. Le dispositif FB3 règle la valeur du retard différentiel procuré par le générateur DG2, de façon à maximiser le degré de polarisation PL. Le dispositif d'asservissement SCU2 permet donc de compenser plus exactement le retard différentiel provoqué par la fibre de liaison LF, notamment si celui-ci varie au cours du temps. Les dispositifs de contre-réaction FB1, FB2, FB3 sont activés séquentiellement de façon à ne modifier qu'un seul réglage à la fois.

Plusieurs modes de réalisation sont possibles pour le générateur DDG2 de retard différentiel réglable.

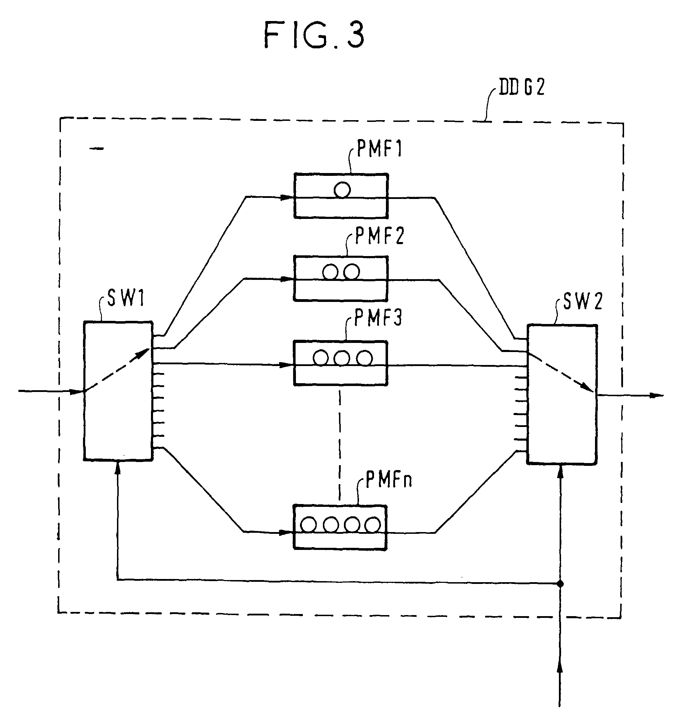

La **figure 3** représente le schéma synoptique d'un mode de réalisation du générateur DDG2. Ce mode de réalisation comporte :

- une pluralité de tronçons de fibre à maintien de polarisation, PNF1, PNF2, PNF3,...,PNFn qui procurent respectivement des retards croissants parce que ces tronçons ont des longueurs différentes ;
- un commutateur optique SW1 ayant : une entrée constituant l'entrée du générateur DDG2, une entrée de commande électrique, et n sorties reliées respectivement à une première extrémité de chacun des n tronçons de fibre à maintien de polarisation, PNF1, PNF2, PNF3,...,PNFn ;
- et un commutateur optique SW2 ayant : une sortie constituant la sortie du générateur DDG2, une entrée de commande électrique reliée en parallèle à l'entrée de commande du commutateur SW1, et n entrées reliées respectivement chacune à une seconde extrémité de l'un des n tronçons de fibre à maintien de polarisation PNF1, PNF2, PNF3,...,PNFn.

Un tel générateur de retard différentiel variable est simple à réaliser mais a pour inconvénient de fournir des valeurs discrètes de retard. On trouve dans le commerce un générateur de retard différentiel procurant un retard variant continûment jusqu'à 250 pico-secondes. Un tel générateur est commercialisé par la société JDS FITEL situé à Nepeam, Ontario, Canada.

Selon une variante de réalisation du premier mode de réalisation décrit en se référant à la figure 1, il est possible de compenser au moins partiellement la dispersion chromatique, en plus de la dispersion de polarisation, en choisissant pour le générateur DDG1, une fibre à maintien de polarisation ayant en outre une dispersion chromatique opposée à celle de la fibre de liaison LF.

## Revendications

1. Dispositif de compensation de la dispersion de polarisation dans un système de transmission optique comportant : un terminal émetteur (TX) émettant un signal optique polarisé, une fibre optique de liaison (LF), éventuellement des amplificateurs optiques, et un terminal récepteur (RX) ; ce dispositif comportant :

- un premier contrôleur de polarisation (FCP1) ;
- des moyens (DDG1) pour engendrer un retard différentiel entre deux modes de polarisation orthogonaux, ce contrôleur et ces moyens étant intercalés entre la fibre de liaison et le terminal récepteur dans cet ordre ;
- et des moyens d'asservissement (SCU1) du premier contrôleur de polarisation (FCP1) ;

   **caractérisé** en ce que les moyens d'asservissement (SCU1) comportent des moyens ( CP1, OF, FCP2, FB2, CP2, A, D1, D2, CU, FB1) pour orienter le vecteur de l'état principal de polarisation de l'ensemble constitué par la fibre (LF), le premier contrôleur de polarisation (FPC1) et les moyens (DDG1) pour engendrer un retard différentiel, notamment de façon à le faire coïncider avec le vecteur de l'état de polarisation du signal à la sortie du terminal émetteur (TX).

2. Dispositif de compensation selon la revendication 1,
   **caractérisé** en ce que les moyens d'asservissement (SCU1) comportent des moyens ( CP1, OF, FCP2, FB2, CP2, A, D1, D2, CU, FB1) pour mesurer le degré de polarisation (PL) du signal optique restitué par les moyens (DDG1) pour engendrer un retard différentiel, et pour commander le premier contrôleur de polarisation (FPC1) de façon à maximiser le degré de polarisation mesuré (PL).

3. Dispositif selon la revendication 1, caractérisé en ce que les moyens (DDG1) pour engendrer un retard différentiel comportent un tronçon (PMF0) de fibre à maintien de polarisation, procurant un retard différentiel fixé, entre deux modes de polarisation orthogonaux, supérieur ou égal au retard différentiel constaté lors de la transmission d'un signal par la fibre de liaison (LF) et le premier contrôleur de polarisation (FPC1).

4. Dispositif selon la revendication 2, caractérisé en ce que les moyens(DDG2) pour engendrer un retard différentiel engendrent un retard réglable, et en ce que ce dispositif comporte en outre des moyens d'asservissement (FB3) pour commander ce retard de façon à maximiser le degré de polarisation mesuré (PL).

5. Disositif selon la revendicaton 2, caractérisé en ce que les moyens d'asservissement du premier contrôleur de polarisation (FPC1) comportent :

- des moyens (CP1, OF) pour prélever une fraction du signal restitué par les moyens (DDG1 ; DDG2) pour engendrer un retard ;
- un second contrôleur de polarisation (FCP2) recevant cette fraction ;

- des moyens (D1) pour mesurer l'intensité totale (P1) du signal à la sortie du second contrôleur de polarisation (FCP2) ;
- des moyens (A, D2, CU, FB2) pour mesurer l'intensité (P2) d'une composante de ce signal selon une direction de polarisation fixée, et pour commander le second contrôleur de polarisation (FCP2) de façon à maximiser cette intensité ;
- des moyens (CU) pour calculer le degré de polarisation en calculant à partir de l'intensité (P2) mesurée selon la direction de polarisation déterminée, et de l'intensité totale mesurée (P1) ;
- et des moyens de contre-réaction (FB1) pour commander le premier contrôleur de polarisation en fonction du degré de polarisation (PL) ainsi calculé, de telle façon que ce degré de polarisation (PL) soit maximisé.

**Patentansprüche**

1. Vorrichtung zur Kompensation der Polarisationsdispersion in einem optischen Übertragungssystem, das aufweist: ein Sendeendgerät (TX), das ein polarisiertes optisches Signal sendet, eine optische Verbindungsfaser (LF), eventuell optische Verstärker und ein Empfangsendgerät (RX); wobei diese Vorrichtung aufweist:

   - eine erste Polarisationssteuerung (FCP1);
   - Mittel (DDG1) zum Erzeugen einer differentiellen Verzögerung zwischen zwei orthogonalen Polarisationsmodi, wobei diese Steuerung und diese Mittel zwischen der Verbindungsfaser und dem Empfangsendgerät in dieser Reihenfolge eingefügt sind;
   - und Mittel (SCU1) zur Regelung der ersten Polarisationssteuerung (FCP1) ;

   dadurch gekennzeichnet, dass die Regelungsmittel (SCU1) Mittel (CP1, OF, FCP2, FB2, CP2, A, D1, D2, CU, FB1) aufweisen, um den Vektor des Hauptpolarisationszustandes des aus der Faser (LF), der ersten Polarisationssteuerung (FPC1) und den Mitteln (DDG1) zum Erzeugen einer differentiellen Verzögerung bestehenden Aufbaus insbesondere derart einzustellen, dass er mit dem Vektor des Polarisationszustandes des Signals am Ausgang des Sendeendgeräts (TX) zusammenfallen gelassen wird.

2. Kompensationsvorrichtung nach Anspruch 1, dadurch gekennzeichnet, dass die Regelungsmittel (SCU1) Mittel (CP1, OF, FCP2, FB2, CP2, A, D1, D2, CU, FB1) aufweisen, um den Polarisationsgrad (PL) des von den Mitteln (DDG1) zum Erzeugen einer differentiellen Verzögerung wiedergegebenen optischen Signals zu messen und die erste Polarisationssteuerung (FPC1) derart zu steuern, dass der gemessene Polarisationsgrad (PL) maximiert wird.

3. Vorrichtung nach Anspruch 1, dadurch gekennzeichnet, dass die Mittel (DDG1) zum Erzeugen einer differentiellen Verzögerung einen Faserabschnitt (PMF0) mit Polarisationserhaltung aufweisen, der zwischen den beiden orthogonalen Polarisationsmodi eine feste differentielle Verzögerung größer oder gleich der bei der Übertragung eines Signals durch die Verbindungsfaser (LF) und die erste Polarisationsteuerung (FPC1) festgestellten differentiellen Verzögerung verursacht.

4. Vorrichtung nach Anspruch 2, dadurch gekennzeichnet, dass die Mittel (DDG2) zum Erzeugen einer differentiellen Verzögerung eine einstellbare Verzögerung erzeugen und dass diese Vorrichtung darüber hinaus Regelungsmittel (FB3) aufweist, um diese Verzögerung derart zu steuern, dass der gemessene Polarisationsgrad (PL) maximiert wird.

5. Vorrichtung nach Anspruch 2, dadurch gekennzeichnet, dass die Regelungsmittel der ersten Polarisationssteuerung (FPC1) aufweisen:

   - Mittel (CP1, OF) zum Abnehmen eines Bruchteils des von den Mitteln (DDG1; DDG2) zum Erzeugen einer Verzögerung wiedergegebenen Signals;
   - eine zweite Polarisationssteuerung (FCP2), die diesen Bruchteil empfängt;
   - Mittel (D1) zum Messen der Gesamtintensität (PI) des Signals am Ausgang der zweiten Polarisationssteuerung (FCP2);
   - Mittel (A, D2, CU, FB2), um die Intensität (P2) einer Komponente dieses Signal in einer festen Polarisationsrichtung zu messen und die Polarisationssteuerung (FCP2) derart zu steuern, dass diese Intensität maximiert wird;
   - Mittel (CU) zum Berechnen des Polarisationsgrades, indem ausgehend von in der bestimmten Polarisationsrichtung gemessenen Intensität (P2) und der gemessenen Gesamtintensität (P1) berechnet wird;
   - und Rückkopplungsmittel (FB1), um die erste Polarisationssteuerung in Abhängigkeit vom so berechneten Polarisationsgrad (PL) derart zu steuern, dass dieser Polarisationsgrad (PL) maximiert wird.

**Claims**

1. Apparatus for compensating polarization dispersion in an optical transmission system comprising a transmitter terminal (TX) for transmitting a polarized optical signal, a link optical fiber (LF), optional optical amplifiers, and a receiver terminal (RX), the apparatus comprising:

a first polarization controller (FPC1);
means (DDG1) for generating a differential delay between two orthogonal polarization modes, said controller and said means being interposed between the link fiber and the receiver terminal, in that order; and
servo-control means (SCU1) for servo-controlling the first polarization controller (FPC1);

said apparatus being characterized in that the servo-control means (SCU1) comprise means (CP1, OF, FPC2, FB2, CP2, A, D1, D2, CU, FB1) for steering the vector of the main polarization state of the assembly constituted by the fiber (LF), the first polarization controller (FPC1) and the means (DDG1) for generating a differential delay, in particular so as to cause said vector to coincide with the vector of the polarization state of the signal at the output of the transmitter terminal (TX).

**2.** Apparatus according to claim 1, characterized in that the servo-control means comprise means (CP1, OF, FPC2, FB2, CP2, A, D1, D2, CU FB1) firstly for measuring the degree of polarization (PL) of the optical signal delivered by the means (DDG1) for generating a differential delay, and secondly for controlling the first polarization controller (FPC1) in a manner such that the measured degree of polarization (PL) is maximized.

**3.** Apparatus according to claim 1, characterized in that the means (DDG1) for generating a differential delay comprise a segment (PMF0) of polarization-maintaining fiber, procuring a fixed differential delay, between two orthogonal polarization modes, that is not less than the differential delay observed when a signal is conveyed by the link fiber (LF) and by the first polarization controller (FPC1).

**4.** Apparatus according to claim 2, characterized in that the means (DDG2) for generating a differential delay generate an adjustable delay, and in that the apparatus further comprises servo-control means (FB3) for controlling the delay in such a manner as to maximize the measured degree of polarization (PL).

**5.** Apparatus according to claim 2, characterized in that the servo-control means for servo-controlling the first polarization controller (FPC1) comprise:

means (CP1, OF) for tapping a fraction of the signal delivered by the means (DDG1; DDG2) for generating a delay;
a second polarization controller (FPC2) receiving this fraction;
means (D1) for measuring the total intensity (P1) of the signal at the output of the second polarization controller (FPC2);
means (A, D2, CU, FB2) for measuring the intensity (P2) of a component of the signal in a fixed polarization direction, and for controlling the second polarization controller (FPC2) in such a manner as to maximize said intensity;
means (CU) for calculating the degree of polarization on the basis of the intensity (P2) measured in the determined polarization direction, and of the measured total intensity (P1); and
negative feedback means (FB1) for controlling the first polarization controller as a function of the calculated degree of polarization (PL) in a manner such that the degree of polarization (PL) is maximized.

# FIG.1

EP 0 853 395 B1

FIG.2

EP 0 853 395 B1

# FIG.3